# EUROPÄISCHE PATENTSCHRIFT

(11) **EP 1 519 085 B1**
(45) Veröffentlichungstag und Bekanntmachung des Hinweises auf die Patenterteilung: **09.08.2006**
(21) Anmeldenummer: 03103577.7
(22) Anmeldetag: 26.09.2003
(51) Int. Cl.: F16H 63/36, F16H 61/18

(54) **Sperrmechanismus eines Schaltgetriebes**
Locking mechanism for a manual gearbox
Mécanisme de blocage pour boîte de vitesses manuelle

(43) Veröffentlichungstag der Anmeldung: 30.03.2005
(73) Patentinhaber: Getrag Ford Transmissions GmbH, 50725 Köln (DE)
(72) Erfinder: Voigt, Torsten, 50354, Hürth (DE); Egyed, Robert, 51147, Köln (DE); Dobrinski, Jan, 40235, Düsseldorf (DE); Doelling, Matthias, 51429, Bergisch-Gladbach (DE)
(74) Vertreter: Drömer, Hans-Carsten

(56) Entgegenhaltungen:
- DE-A- 19 857 713
- US-A- 2 684 600
- US-A- 4 633 728
- US-A- 5 060 538

## Beschreibung

Die Erfindung betrifft einen Sperrmechanismus eines Schaltgetriebes zur Zwangsführung eines Kulissenstifts, der starr mit einer Schaltwelle eines Schaltgetriebes verbunden ist.

Ein Sperrmechanismus der oben genannten Art ist beispielsweise aus der gattungsbildenden DE 198 57 713 DE bekannt. Der Sperrmechanismus umfasst eine Kulissenplatte mit einem Kulissenausschnitt, in den der Kulissenstift greift. Innerhalb des Kulissenausschnitts ist der Kulissenstift bewegbar angeordnet. Der Kulissenausschnitt weist eine Wählgasse sowie mehrere Schaltgassen auf, die parallel und in gleichen Abständen zueinander angeordnet sind und von der Wählgasse im Wesentlichen senkrecht gekreuzt werden. Eine Sperrvorrichtung schränkt die Bewegung des Kulissenstifts in der Wählgasse ein. So umfasst die Sperreinrichtung ein Sperrelement mit einer Nase, an der der Kulissenstift anliegt. Die Bewegbarkeit des Sperrelements wird durch zwei Anschlagzapfen begrenzt, die über der Kulissenplatte angeordnet sind. Des Weiteren umfasst die Sperrvorrichtung einen an der Schaltwelle angeformten Bund und einen Bolzen, der über ein Elektromagneten in radialer Richtung der Schaltwelle verschiebbar ist. In einer Sperrstellung hintergreift der Bolzen den Bund, so daß eine axiale Bewegung der Schaltwelle und somit des Kulissenstifts eingeschränkt ist.

Die in der DE 198 57 713 DE offenbarte Sperrvorrichtung umfasst mehrere Bauteile, die genau aufeinander abgestimmt sein müssen, damit der Sperrmechanismus exakt arbeiten kann. Um eine exakte Funktionsweise des Sperrmechanismus erreichen zu können, müssen die einzelnen Bauteile innerhalb enger Fertigungstoleranzen hergestellt sein.

Der Erfindung liegt daher die Aufgabe zu Grunde, einen Sperrmechanismus zur Zwangsführung eines Kulissenstifts einer Schaltwelle bereitzustellen, der einen einfachen Aufbau aufweist und kostengünstig hergestellt werden kann.

Die Aufgabe wird durch einen Sperrmechanismus gemäß des Anspruchs 1 gelöst. Dadurch, daß das Sperrelement in den Kulissenausschnitt hineinragt und daß der Kulissenausschnitt einen ersten und einen zweiten Anschlag umfasst, die eine erste und eine zweite Endstellung definieren, kann auf zusätzliche Anschlagzapfen über der Kulissenplatte verzichtet werden. Dabei entfällt die aufwendige Ausrichtung der Anschlagzapfen in Bezug auf die Kulissenplatte beziehungsweise in Bezug auf die Wählgasse.

In einem bevorzugten Ausführungsbeispiel umfasst die Sperrvorrichtung einen Sperrhebel, an dem das Sperrelement in Bewegungsrichtung anliegt, wenn der Sperrhebel sich in einer Sperrposition befindet. Somit ist es möglich, das entlang der Wählgasse bewegbare Sperrelement auch in einer zwischen den beiden Endstellungen liegenden Stellung zu arretieren beziehungsweise zu sperren. Dadurch kann be ispielsweise sichergestellt werden, daß der Kulissenstift von einer Schaltgasse mit zwei benachbarten Schaltgassen nur in einer der beiden benachbarten Schaltgassen geführt werden kann.

Vorzugsweise umfasst das Sperrelement einen Sperrkamm mit mehreren, in einer Reihe angeordneten Zähne, die in die Wählgasse hineinragen. Dabei kann der Sperrkamm mit seinen Zähnen einstückig ausgebildet sein, so daß eine Befestigung oder Verspannung der Zähne untereinander nicht notwendig ist. Damit die Zähne in der Wählgasse hin- und herbewegt werden können, ist die Tiefe oder Dicke der Zähne kleiner als die Breite der Wählgasse.

Die Zähne weisen vorzugsweise jeweils eine Breite auf, die dem Abstand zwischen zwei benachbarten Schaltgassen entspricht (der Abstand soll dabei die Strecke zwischen einem seitlichen Ende einer Schaltgasse und dem angrenzenden seitlichen Ende der benachbarten Schaltgasse sein. Der Abstand der Zähne untereinander entspricht der Breite einer Schaltgasse. Somit lässt sich der Sperrkamm in der Wählgasse derart anordnen, daß die Lücke zwischen zwei benachbarten Zähnen eine ungehinderte Bewegung des Kulissenstift in einer Schaltgasse ermöglicht, die zwei Zähne jedoch gleichzeitig, soweit das Sperrelement fixiert ist, für eine exakte Führung der Kulissenstifts entlang der Schaltgasse im Kreuzungsbereich mit der Wählgasse sorgen.

In einem bevorzugten Ausführungsbeispiel ist das Sperrelement von einer Neutralstellung in die erste oder zweite Endstellung um jeweils einen Verschiebeweg bewegbar, dessen Länge der Summe der Breite einer Schaltgasse und dem Abstand zwischen zwei benachbarten Schaltgassen entspricht. In der Neutralstellung sind die Zähne derart in der Wählgasse angeordnet, daß die Lücken zwischen den Zähnen eine ungehinderte Bewegung des Kulissenstifts in den Schaltgasse zulässt. Wird mittels des Kulissenstifts die (nicht arretierte) Sperrvorrichtung in eine Richtung entlang der Wählgasse gedrückt, liegt der Kulissenstift an einem Zahn der Sperrvorrichtung an. Der mögliche Verschiebeweg ist dabei begrenzt: Der Kulissenstift kann nur in eine direkt benachbarte Schaltgasse geführt werden. Ein Führen des Kulissenstift entlang der Wählgasse in eine übernächste Schaltgasse ist nicht möglich.

Vorzugsweise weist der Sperrkamm bei einer Schaltkulisse mit n Schaltgassen wenigstens n-1 Zähne auf. Bei beispielsweise vier Schaltgassen kann der Sperrkamm somit 3 Zähne umfassen.

In der Neutralstellung können die n-1 Zähne zwischen den n Schaltgassen angeordnet sein. Bei dem Beispiel mit vier Schaltgassen ist der erste Zahn zwischen der ersten und zweiten Schaltgasse, der zweite Zahn zwischen zweiter und dritter Schaltgasse und der dritte Zahn zwischen dritter und vierter Schaltgasse angeordnet.

In einem bevorzugten Ausführungsbeispiel kann die Sperrvorrichtung eine Führung umfassen, die in eine parallel zur Wählgasse verlaufende Führungsgasse greift.

Durch die Führung wird verhindert, daß sich die Sperrvorrichtung ohne Verkanten oder Verdrehen in der Wählgasse bewegen kann.

Vorzugsweise ist die Führungsgasse in Verlängerung der Wählgasse angeordnet. In diesem Fall liegen die Führung und die Zähne des Sperrkamms in einer Ebene. Die Führung kann dabei die Form eines Zahns annehmen, ohne daß dieser Zahn die gleiche Breite wie die anderen Zähne aufweisen muss. Auch ist sein Abstand zu dem nächstliegenden Zahn in Grenzen wählbar.

Das Sperrelement kann durch wenigstens eine Rückstellfeder in der Neutralstellung gehalten werden. Zweckmäßig ist es, das Sperrelement zwischen zwei Rückstellfedern zu schalten. Soll das Sperrelement aus der Neutralstellung in eine der beiden Endstellungen bewegt werden, muß die Kraft der Rückstellfedern überwunden werden. Diese Kraft wird durch den Kulissenstift über einen Zahn auf das Sperrelement übertragen. Wird der Kulissenstift aus der Wählgasse in eine Schaltgasse geführt, so daß der Kulissenstift nicht mehr an dem Zahn anliegt, drücken die Rückstellfedern das Sperrelement wieder in die Neutralstellung. Die Neutralstellung wird in diesem Fall durch das Kräftegleichgewicht der Rückstellfedern definiert. Bevorzugt wird eine definierte Neutralstellung, die unabhängig von den Toleranzen und dem Verschleiß der Feder ist.

Um solch eine Neutralstellung auf andere Weise zu definieren, kann wenigstens ein Anschlag für die Rückstellfeder vorgesehen sein. Liegt die Rückstellfeder an diesem Anschlag an, befindet sich das Sperrelement in einer geometrisch bestimmten Neutralstellung. Diese ist unabhängig von dem Kräftegleichgewicht der Rückstellfedern.

Vorzugweise weist der Kulissenausschnitt der Kulissenplatte an den zwei Enden der Wählgasse Verlängerungen auf, so daß die Wählgasse über den Kreuzungspunkt mit einer ersten Schaltgasse und über den Kreuzungspunkt mit einer letzten Schaltgasse hinausgeht. Die Verlängerung weist wenigstens eine Länge auf, die mindestens dem Abstand benachbarter Schaltgassen entspricht. Somit kann eine Verlängerung einen äußeren Zahn einer Sperrkamms, dessen Zähne jeweils eine Breite aufweisen, die dem Abstand benachbarter Schaltgassen entspricht, vollständig aufnehmen, so daß der äußere Zahn die Bewegung eines Kulissenstifts in der ersten beziehungsweise letzten Schaltgasse nicht behindert.

Anhand eines in den Figuren dargestellten Ausführungsbeispiels wird die Erfindung näher beschrieben. Es zeigen:
- Figur 1: eine perspektivische Ansicht eines Ausführungsbeispiels des erfindungsgemäßen Sperrmechanismus;
- Figur 2: eine Draufsicht einer Kulissenplatte;
- Figur 3: zwei verschiedene Ausführungsformen der Sperrvorrichtung; und
- Figur 4: die Kulissenplatte der Figur 2 mit der im Schnitt dargestellten Sperrvorrichtung, wobei die Sperrvorrichtung verschiedene Stellungen einnimmt.

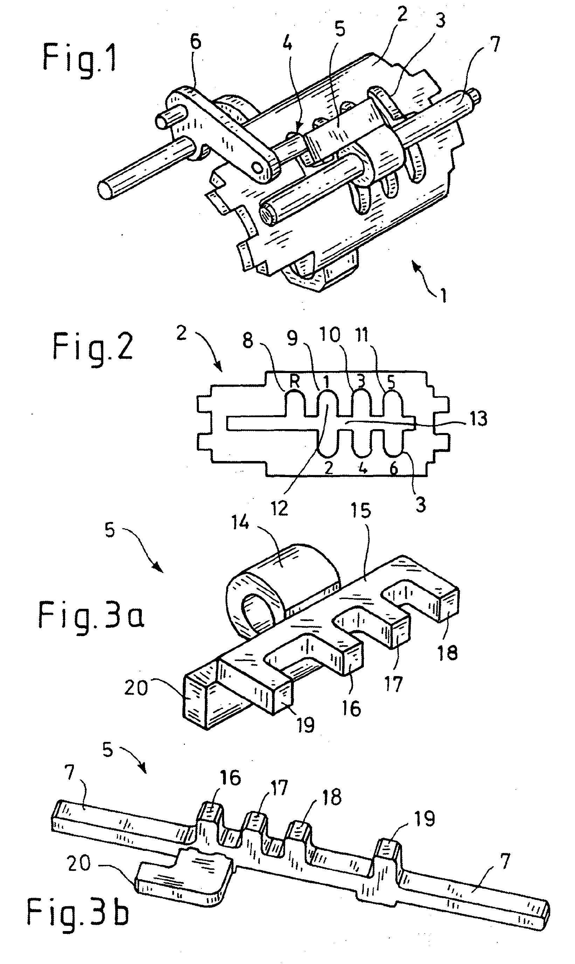

Figur 1 zeigt ein Sperrmechanismus 1 in einer perspektivischen Ansicht. Der Sperrmechanismus 1 umfasst eine Kulissenplatte 2 mit einem Kulissenausschnitt 3 und eine Sperrvorrichtung 4 mit einem Sperrelement 5 und einem Sperrhebel 6. Das Sperrelement 5 ist bewegbar auf einer Welle 7 angeordnet, die parallel zu einer hier nicht dargestellten Schaltwelle verläuft. In der dargestellten Stellung des Sperrhebels 6, an dem die axial zur Schaltwelle bewegbare Sperrvorrichtung 5 anliegt, ist eine Bewegung der Sperrvorrichtung nur in eine Richtung möglich.

Figur 2 zeigt die Kulissenplatte 2 mit dem Kulissenausschnitt 3 in der Draufsicht. Der Kulissenausschnitt umfasst vier parallel verlaufende Schaltgassen 8, 9, 10, 11, die zueinander jeweils einen gleichen Abstand aufweisen. Die Kulissenplatte kann für ein Schaltgetriebe mit 6 Gängen und einem Rückwärtsgang verwendet werden, was durch die an den Enden der Schaltgassen angebrachten Ziffern R und 1 bis 6 verdeutlicht wird. Figur 2 zeigt ein starr mit der Schaltwelle verbundener Kulissenstift 12, der von unten durch die Zeichenebene der Figur 2 durch die Kulissenplatte greift, an dem oberen Ende der Schaltgasse 9. In dieser Position des Kulissenstifts 12 ist der 1. Gang des Schaltgetriebes geschaltet. Eine Wählgasse 13 verläuft sen krecht zu den Schaltgassen 8 bis 11 und verbindet diese untereinander.

Figur 3a zeigt eine Ausführungsform des Sperrelements 5 in perspektivischer Ansicht. Eine Buchse 14 mit einer zylinderförmigen Innenfläche sorgt für die axial bewegbare Lagerung des Sperrelements 5. An der Buchse 14 einstückig angeformt ist ein Sperrkamm 15 mit drei Zähnen 16, 17 und 18 sowie mit einer Führung 19, die ebenfalls als Zahn ausgebildet ist. Des Weiteren umfasst die Sperrvorrichtung 5 einen Anschlag 20, der mit dem Sperrhebel 6 zur axialen (Teil-)Arretierung zusammenwirkt. In Zusammenschau mit Figur 1 wird deutlich, daß die Zähne 16, 17 und 18 des Sperrelementes 5 in die Wählgasse 13 hineingreifen.

Figur 3b zeigt eine zweite Ausführungsform des Sperrelements 5, vorzugsweise gefertigt aus zwei gefügten Blechen. Bei dieser sind das Sperrelement 5 und die Welle 7 starr verbunden, und die Welle 7 ist parallel zur Schaltwelle verschiebbar gelagert. Dadurch ergibt sich vorteilhaft eine erhöhte Führungslänge des Sperrelements 5. Das Sperrelement kann aber auch einstückig, z. B. als Gußteil, ausgeführt sein. Ebenso kann der Anschlag 20 als separates Teil am Sperrelement 5 angeordnete sein oder integraler Bestandteil des Sperrelements 5 sein.

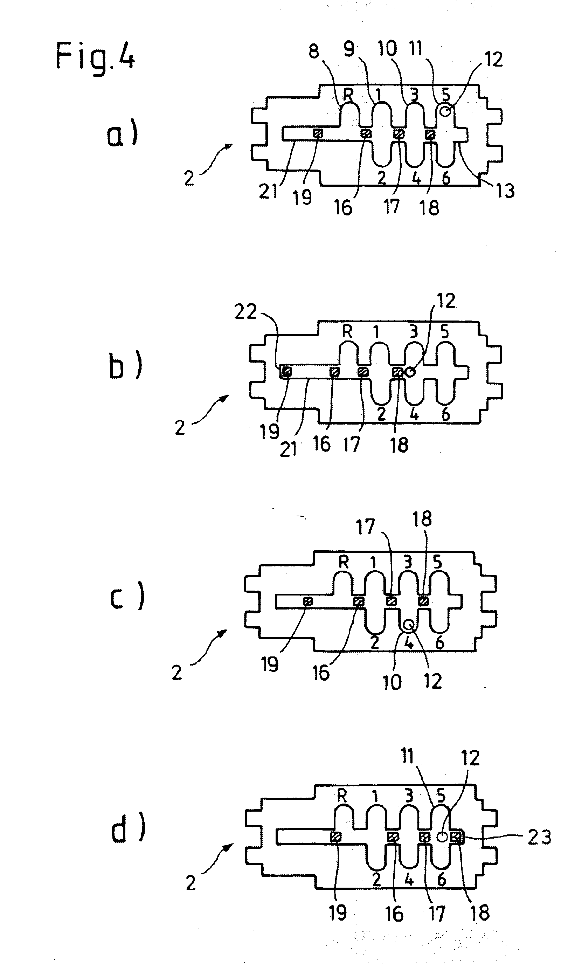

Anhand der Figuren 4a bis 4d wird exemplarisch ein möglicher Schalt- und Wählverlauf gezeigt. Andere Schalt- und Wählabläufe erfolgen analog den hier gezeigten Beispielen.

Figur 4a zeigt die Kulissenplatte der Figur 2 mit dem Kulissenstift 12 (nun in anderer Position) und mit den im Schnitt dargestellten Zähnen 16, 17 und 18. Die Führung 19 ist ebenfalls im Schnitt dargestellt und befindet sich in einer Führungsgasse 21, die eine Verlängerung der Wählgasse 13 darstellt. Die Führung 19 dient zur Verdrehsicherung der Sperrvorrichtung 5. Die Zähne 16, 17 und 18 der Sperrvorrichtung 5 sind in der Wählgasse jeweils zwischen zwei Schaltgassen angeordnet. Der Kulissenstift 12 liegt in der Schaltgasse 11 der 5. Gang ist eingelegt.

Die Figuren 4a und 4b zeigen in Zusammenschau, wie die Sperrvorrichtung 5 mit den Zähnen 16, 17 und 18 sowie mit der Führung 19 die Bewegung des Kulissenstifts in der Wählgasse beschränkt. Soll beispielsweise ausgehend vom 5. Gang in den 4. Gang geschaltet werden, wird der Kulissenstift 12 in die Mitte der Wählgasse 11 geführt und gegen den Zahn 18 gedrückt. Wenn das Sperrelement 5 nicht arretiert ist, wird die Sperrvorrichtung 5 nach links gedrückt, bis die Führung 19 an einem ersten Anschlag 22, der das Ende der Führungsgasse 21 definiert, anliegt (vgl. Figur 4b). Figur 4b zeigt das Sperrelement 5 in einer ersten Endstellung. Wird nun der Kulissenstift entlang der Schaltgasse 10 zum Einlegen des 4. Gangs bewegt, kann das Sperrelement 5 beispielsweise aufgrund von Rückstellfedern, die nicht dargestellt sind, wieder in die Neutralstellung zurückkehren. Es wird deutlich, daß ein Zurückschalten vom 5. Gang in den 1. oder 2. Gang aufgrund des Sperrelements nicht möglich ist.

Figur 4d zeigt die Zähne 16, 17 und 18 der Sperrvorrichtung 5 in einer zweiten Endstellung. Hier wird von dem 4. Gang in den 5. Gang geschaltet. Der Kulissenstift 12 schiebt den Zahn 18 nun nach rechts durch die Schaltgasse 11, bis er an einem zweiten Anschlag 23 des Kulissenausschnitts 3 anliegt.

## Patentansprüche

1. Sperrmechanismus (1) eines Schaltgetriebes zur Zwangsführung eines Kulissenstifts (12), der starr mit einer Schaltwelle eines Schaltgetriebes verbunden ist, umfassend:
a) eine Kulissenplatte (2) mit einem Kulissenausschnitt (3), die eine Wählgasse (13) und mehrere Schaltgassen (8, 9, 10, 11) umfasst, wobei
- die Schaltgassen (8, 9, 10, 11) im Wesentlichen parallel und in gleichen Abständen zueinander angeordnet sind und von der Wählgasse (13) im Wesentlichen senkrecht gekreuzt werden, und
- der Kulissenstift (12) in den Kulissenausschnitt (3) greift;
b) eine Sperrvorrichtung (4) zur Einschränkung der Bewegung des Kulissenstifts (12) in der Wählgasse (13), mit wenigstens einem Sperrelement (5), das entlang der Wählgasse (13) zwischen einer ersten und zweiten Endstellung bewegbar angeordnet ist,
**dadurch gekennzeichnet, daß**
das Sperrelement (5) in den Kulissenausschnitt (3) hineinragt, wobei das Sperrelement (5) in der ersten Endstellung an einem ersten Anschlag (22) des Kulissenausschnitts (3) und in der zweiten Endstellung an einem zweiten Anschlag (23) des Kulissenausschnitts (3) anliegt.

2. Sperrmechanismus (1) nach Anspruch 1,
**dadurch gekennzeichnet, daß**
die Sperrvorrichtung (4) wenigstens einen Sperrhebel (6) umfasst, an dem das Sperrelement (5) in Längsrichtung der Wählgasse (13) anliegt, wenn der Sperrhebel (6) sich in einer Sperrposition befindet.

3. Sperrmechanismus (1) nach Anspruch 1 oder 2,
**dadurch gekennzeichnet, daß**
das Sperrelement (5) einen Sperrkamm (15) mit mehreren, in einer Reihe angeordneten Zähnen (16, 17, 18) umfasst, die in die Wählgasse (13) hineinragen.

4. Sperrmechanismus (1) nach Anspruch 3,
**dadurch gekennzeichnet, daß**
die Zähne (16, 17, 18) jeweils eine gleiche Breite aufweisen und zu benachbarten Zähnen einen gleichen Abstand aufweisen, wobei die Breite eines Zahns dem Abstand zwischen zwei Schaltgassen (8, 9, 10, 11) entspricht und der Abstand der Zähne (16, 17, 18) untereinander der Breite einer Schaltgasse (8, 9, 10, 11) entspricht.

5. Sperrmechanismus (1) nach einem der Ansprüche 1 bis 4,
**dadurch gekennzeichnet, daß**
von einer Neutralstellung des Sperrelements (5) in die erste oder zweite Endstellung um jeweils einen Verschiebeweg bewegbar ist, der sich aus der Breite einer Schaltgasse und dem Abstand zwischen zwei benachbarten Schaltgassen zusammensetzt.

6. Sperrmechanismus (1) nach einem der Ansprüche 3 bis 5,
**dadurch gekennzeichnet, daß**
der Sperrkamm (15) bei n Schaltgassen wenigstens n-1 Zähne aufweist.

7. Sperrmechanismus (1) nach Anspruch 6,
**dadurch gekennzeichnet, daß**
in der Neutralstellung des Sperrkamms (15) die n-1 Zähne zwischen der ersten Schaltgasse (8) und der n-ten Schaltgasse (11) angeordnet sind.

8. Sperrmechanismus (1) nach einem der Ansprüche 1 bis 7,
**dadurch gekennzeichnet, daß**
das Sperrelement (5) eine Führung (19) umfasst, die in eine parallel zur Wählgasse (13) verlaufende Führungsgasse (21) der Kulissenplatte (2) greift.

9. Sperrmechanismus (1) nach Anspruch 8,
**dadurch gekennzeichnet, daß**
die Führungsgasse (21) in Verlängerung der Wählgasse (13) angeordnet ist.

10. Sperrmechanismus (1) nach einem der Ansprüche 1 bis 9, **dadurch gekennzeichnet, daß** das Sperrelement (5) durch wenigstens eine Rückstellfeder in der Neutralstellung gehalten wird.

11. Sperrmechanismus (1) nach Anspruch 10,
**dadurch gekennzeichnet, daß**
durch einen Anschlag für die Rückstellfeder die Neutralstellung definiert wird.

12. Sperrmechanismus (1) nach einem der vorherigen Ansprüche,
**dadurch gekennzeichnet, daß**
daß das Sperrelement (5) mit der Welle (7) fest verbunden ist und die Welle (7) längsverschiebbar gelagert ist.

13. Sperrmechanismus (1) nach Anspruch 12,
**dadurch gekennzeichnet, daß**
daß Sperrelement (5) und Welle (7) einteilig ausgeführt sind.

14. Sperrmechanismus (1) nach einem der vorherigen Ansprüche,
**dadurch gekennzeichnet, daß**
der Kulissenausschnitt (3) an den zwei Enden der Wählgasse (13) jeweils eine Verlängerung aufweist, die über den Kreuzungspunkt mit der ersten Schaltgasse (8) beziehungsweise über den Kreuzungspunkt mit der n-ten Schaltgasse (11) hinausgeht, wobei jede Verlängerung sich wenigstens über eine Länge erstreckt, die dem Abstand zweier benachbarter Schaltgassen entspricht.

## Claims

1. Locking mechanism (1) for a manual gearbox for restricted guidance of a gate pin (12) which is rigidly connected to a shift shaft of a manual gearbox, comprising:
a) a gate plate (2) having a gate cut-out (3) which comprises one selector slot (13) and a plurality of shift slots (8, 9, 10, 11),
- the shift slots (8, 9, 10, 11) being arranged substantially parallel to and at equal distances from one another and being crossed substantially perpendicularly by the selector slot (13), and
- the gate pin (12) engaging into the gate cut-out (3);
b) a locking device (4) for restricting the movement of the gate pin (12) in the selector slot (13), having at least one locking element (5) which as arranged such that it can move along the selector slot (13) between a first and a second end position,
**characterized in that**
the locking element (5) projects into the gate cut-out (3), the locking element (5) bearing against a first stop (22) of the gate cut-out (3) in the first end position and bearing against a second stop (23) of the gate cut-out (3) in the second end position.

2. Locking mechanism (1) according to Claim 1,
**characterized in that**
the locking device (4) comprises at least one locking lever (6), against which the locking element (5) bears in the longitudinal direction of the selector slot (13) when the locking lever (6) is in a locking position.

3. Locking mechanism (1) according to Claim 1 or 2,
**characterized in that**
the locking element (5) comprises a locking comb (15) with a plurality of teeth (16, 17, 18) which are arranged in a row and project into the selector slot (13).

4. Locking mechanism (1) according to Claim 3,
**characterized in that**
the teeth (16, 17, 18) are each of equal width and are at an equal distance from adjacent teeth, the width of a tooth corresponding to the distance between two shift slots (8, 9, 10, 11) and the distance between the teeth (16, 17, 18) corresponding to the width of a shift slot (8, 9, 10, 11).

5. Locking mechanism (1) according to one of Claims 1 to 4,
**characterized in that**
from a neutral position, the locking element (5) can be moved through a displacement travel into the first or into the second end position, which displacement travel is in each case composed of the width of a shift slot and the distance between two adjacent shift slots.

6. Locking mechanism (1) according to one of Claims 3 to 5,
**characterized in that**
for n shift slots, the locking comb (15) has at least n-1 teeth.

7. Locking mechanism (1) according to Claim 6,
**characterized in that**
in the neutral position of the locking comb (15), the n-1 teeth are arranged between the first shift slot (8) and the n-th shift slot (11).

8. Locking mechanism (1) according to one of Claims 1 to 7,
**characterized in that**
the locking element (5) comprises a guide (19) which engages into a guide slot (21), which runs parallel to the selector slot (13), of the gate plate (2).

9. Locking mechanism (1) according to Claim 8,
**characterized in that**
the guide slot (21) is arranged as an extension of the selector slot (13).

10. Locking mechanism (1) according to one of claims 1 to 9,
**characterized in that**
the locking element (5) is held in the neutral position by means of at least one return spring.

11. Locking mechanism (1) according to Claim 10,
**characterized in that**
the neutral position is defined by means of a stop for the return spring.

12. Locking mechanism (1) according to one of the preceding claims,
**characterized in that**
the locking element (5) is fixedly connected to the shaft (7), and the shaft (7) is mounted in a longitudinally displaceable manner.

13. Locking mechanism (1) according to Claim 12,
**characterized in that**
the locking element (5) and the shaft (7) are embodied in one piece.

14. Locking mechanism (1) according to one of the preceding claims,
**characterized in that**
the gate cut-out (3) has an extension at each of the two ends of the selector slot (13), which extension extends, respectively, beyond the point of intersection with the first shift slot (8) or beyond the point of intersection with the n-th shift slot (11), each extension extending at least over a length which corresponds to the distance between two adjacent shift slots.

## Revendications

1. Mécanisme de blocage (1) d'une boîte de vitesses pour le guidage forcée d'une tige de coulisse (12) qui est connecté rigidement à un arbre de commutation d'une boîte de vitesses, comprenant :
a) un plateau à coulisse (2) comprenant une section de coulisse (3) qui comprend une voie de sélection (13) et plusieurs voies de commutation (8, 9, 10, 11),
- les voies de commutation (8, 9, 10, 11) étant disposées essentiellement parallèlement et à distances égales les unes des autres et étant croisées essentiellement perpendiculairement par la voie de sélection (13), et
- la tige de coulisse (12) venant en prise dans la section de coulisse (3) ;
b) un dispositif de blocage (4) pour limiter le mouvement de la tige de coulisse (12) dans la voie de sélection (13), avec au moins un élément de blocage (5) qui est disposé de manière déplaçable le long de la voie de sélection (13) entre une première et une deuxième position d'extrémité,
**caractérisé en ce que**
l'élément de blocage (5) pénètre dans la section de coulisse (3), l'élément de blocage (5) s'appliquant dans la première position d'extrémité contre une première butée (22) de la section de coulisse (3) et dans la deuxième position d'extrémité contre une deuxième butée (23) de la section de coulisse (3).

2. Mécanisme de blocage (1) selon la revendication 1,
**caractérisé en ce que**
le dispositif de blocage (4) comprend au moins un levier de blocage (6) contre lequel s'applique l'élément de blocage (5) dans la direction longitudinale de la voie de sélection (13) lorsque le levier de blocage (6) se trouve dans une position de blocage.

3. Mécanisme de blocage (1) selon la revendication 1 ou 2,
**caractérisé en ce que**
l'élément de blocage (5) comprend un peigne de blocage (15) avec plusieurs dents (16, 17, 18) disposées en rangée, qui pénètrent dans la voie de sélection (13) .

4. Mécanisme de blocage (1) selon la revendication 3,
**caractérisé en ce que**
les dents (16, 17, 18) présentent chacune une largeur identique et présentent un espacement identique par rapport aux dents voisines, la largeur d'une dent correspondant à la distance entre deux voies de commutation (8, 9, 10, 11) et la distance entre les dents (16, 17, 18) correspondant à la largeur d'une voie de commutation (8, 9, 10, 11).

5. Mécanisme de blocage (1) selon l'une quelconque des revendications 1 à 4,
**caractérisé en ce que**
depuis une position neutre de l'élément de blocage (5), celui-ci peut être déplacé dans la première ou la deuxième position d'extrémité d'une course de déplacement respective qui se compose de la largeur d'une voie de commutation et de la distance entre deux voies de commutation adjacentes.

6. Mécanisme de blocage (1) selon l'une quelconque des revendications 3 à 5,
**caractérisé en ce que**
le peigne de blocage (15) présente au moins n-1 dents pour n voies de commutation.

7. Mécanisme de blocage (1) selon la revendication 6,
**caractérisé en ce que**
dans la position neutre du peigne de blocage (15) les n-1 dents sont disposées entre la première voie de commutation (8) et la n-ième voie de commutation (11).

8. Mécanisme de blocage (1) selon l'une quelconque des revendications 1 à 7,
**caractérisé en ce que**
l'élément de blocage (5) comprend une coulisse (19) qui vient en prise dans une voie de guidage (21) du plateau à coulisse (2) s'étendant parallèlement à la voie de sélection (13).

9. Mécanisme de blocage (1) selon la revendication 8,
**caractérisé en ce que**
la voie de guidage (21) est disposée dans le prolongement de la voie de sélection (13).

10. Mécanisme de blocage (1) selon l'une quelconque des revendications 1 à 9, **caractérisé en ce que** l'élément de blocage (5) est maintenu dans la position neutre par au moins un ressort de rappel.

11. Mécanisme de blocage (1) selon la revendication 10,
**caractérisé en ce que**
la position neutre est définie par une butée pour le ressort de rappel.

12. Mécanisme de blocage (1) selon l'une quelconque des revendications précédentes,
**caractérisé en ce que**
l'élément de blocage (5) est connecté fixement à l'arbre (7) et l'arbre (7) est monté de manière déplaçable en longueur.

13. Mécanisme de blocage (1) selon la revendication 12,
**caractérisé en ce que**
l'élément de blocage (5) et l'arbre (7) sont réalisés d'une seule pièce.

14. Mécanisme de blocage (1) selon l'une quelconque des revendications précédentes,
**caractérisé en ce que**
la section de coulisse (3) présente au niveau des deux extrémités de la voie de sélection (13) à chaque fois un prolongement qui se prolonge au-delà du point d'intersection avec la première voie de commutation (8) respectivement au-delà du point d'intersection avec la n-ième voie de commutation (11), chaque prolongement s'étendant sur au moins une longueur qui correspond à l'espacement entre deux voies de commutation voisines.
